# FASCICULE DE BREVET EUROPEEN

(11) **EP 1 995 142 B1**
(45) Date de publication et mention de la délivrance du brevet: **05.05.2010**
(21) Numéro de dépôt: 08104026.3
(22) Date de dépôt: 20.05.2008
(51) Int. Cl.: B60T 17/06, B60T 11/26

(54) **Dispositif d'alimentation d'un circuit hydraulique de freinage comprenant un filtre à particules**
Zuleitungsvorrichtung für einen hydraulischen Bremsschaltkreis, die einen Partikelfilter umfasst
Device for supplying a hydraulic braking circuit comprising a particle filter

(30) Priorité: 21.05.2007 FR 0703600
(43) Date de publication de la demande: 26.11.2008
(73) Titulaire: Robert Bosch GmbH, 70442 Stuttgart (DE)
(72) Inventeur: L'aot, Michel, 93240 STAINS - FRANCE (FR); Lenczner, Sylvain, 75020 PARIS (FR); Duchossoy, Christophe, 95270 VIARNES (FR); Beaures-D'augeres, Olivier, 08019 BARCELONE (ES)
(74) Mandataire: Hurwic, Aleksander Wiktor

(56) Documents cités:
- EP-A- 1 570 890
- DE-A1- 10 002 118

## Description

### Domaine de l'invention

L'invention concerne le domaine des véhicules automobiles et plus spécifiquement, un réservoir de liquide de frein alimentant les circuits hydrauliques de freinage et d'embrayage.

### Etat de la technique

D'une manière générale, un circuit hydraulique de freinage comprend un réservoir de liquide de frein contenant un fluide hydraulique, fluide destiné à transmettre aux freins des roues avant et arrière une pression hydraulique formée par déplacement d'un piston dans un maître-cylindre, lorsque le conducteur du véhicule actionne un moyen de freinage, par exemple la pédale de frein.

Il existe dans les véhicules automobiles d'autres systèmes hydrauliques, et notamment l'embrayage, qui peut utiliser le même fluide hydraulique que le circuit hydraulique de freinage. Afin de simplifier les circuits hydrauliques, on utilise un réservoir de fluide hydraulique commun pour les deux circuits, à savoir pour le circuit de freinage et pour le circuit d'embrayage. Ces réservoirs sont typiquement fabriqués en matériau plastique, sous la forme de deux coques assemblées par soudage.

Comme l'absorption hydraulique du circuit de freinage augmente avec l'usure des éléments de friction, il y a une perte progressive de liquide de frein, de sorte qu'il convient.de rajouter périodiquement du liquide de frein dans le réservoir, de manière à conserver un niveau de liquide de sensiblement constant dans le réservoir de liquide de frein. Au contraire, l'usure de l'embrayage résulte habituellement en un refoulement de liquide hydraulique dans le réservoir. Il y a donc un transfert de liquide hydraulique du réservoir vers le frein. Dans le cas où on utilise un réservoir de fluide hydraulique commun pour les circuits de frein et les circuits d'embrayage, il peut y avoir un transfert progressif de liquide hydraulique de l'embrayage vers le frein. Ce liquide peut se charger de particules ou débris solides, métalliques ou non, qui se détachent des parois métalliques avec lesquelles le liquide est en contact, par abrasion ou tout autre mécanisme. La plus grande dimension de ces particules ou débris est typiquement comprise entre 100 et 500 µm. Ils peuvent être entraînées dans le circuit de freinage, où leur présence est particulièrement indésirable. En effet, les systèmes anti-blocage (ABS) comportent typiquement des valves à pilotage électronique, qui sont en général des électrovalves à billes ; ces électrovalves peuvent se dégrader lorsqu'elles sont traversées par des particules ou débris solides. De même, un système de type ABS comporte de joints d'étanchéité susceptible de se dégrader en contact avec des particules ou débris solides.

EP 1 570 890 décrit un dispositif de décantation et de filtrage pour réservoir de liquide de frein, selon le préamlule de la revendication 1.

### Problèmes posés

Le problème que la présente invention se propose de résoudre est de positionner à un endroit approprié dans le circuit hydraulique de freinage ou d'embrayage un moyen de filtration qui permet de confiner les particules ou débris solides entrainés par le fluide hydraulique, sans risque de voir ce moyen de filtration se boucher en cours d'utilisation.

### Objet de l'invention

L'invention concerne un dispositif d'alimentation d'un circuit hydraulique de freinage qui empêche, par filtration, la pollution des circuits de freinage par des particules provenant du circuit hydraulique d'embrayage.

### Description de l'invention

Le dispositif d'alimentation d'un circuit hydraulique de freinage d'un véhicule automobile doté d'un embrayage à commande hydraulique, en un fluide hydraulique, dit aval, de freinage, comprend une enceinte destinée à contenir ledit fluide hydraulique, ladite enceinte étant pourvue d'au moins un conduit de sortie alimentant ledit circuit hydraulique, et d'un orifice d'entrée permettant une introduction dudit fluide hydraulique aval dans ladite enceinte, de manière à compenser toute perte ou consommation dudit liquide hydraulique aval dans ledit circuit hydraulique de freinage.

Il comprend les caractéristiques suivantes :
a) ladite enceinte est une enceinte dite aval formant une partie dite aval d'un réservoir, ledit réservoir comprenant une partie dite amont formant une enceinte dite amont destinée à être alimentée en un fluide hydraulique, dit amont, de l'embrayage dudit véhicule,
b) ladite enceinte amont comprend au moins un conduit dit d'entrée, ledit conduit d'entrée assurant un transfert dudit fluide hydraulique amont dudit embrayage vers ladite enceinte amont,
c) ledit orifice d'entrée est un orifice intermédiaire faisant déboucher ladite enceinte amont dans ladite enceinte aval, ledit orifice intermédiaire étant doté d'un moyen de filtration dudit fluide hydraulique amont de manière à transformer en continu ledit fluide hydraulique amont, typiquement chargé de particules solides en ledit fluide hydraulique aval dépourvu de particules solides et ainsi propre à alimenter ledit circuit de freinage, d) ledit moyen de filtration forme une pièce de filtration composite comprenant une partie périphérique assemblée de manière étanche audit corps de récipient et une partie centrale filtrante.

La combinaison a) à d) des moyens caractéristiques de l'invention permet de résoudre les problèmes posés. En effet, elle permet, en purifiant et en transférant le fluide hydraulique amont de la chambre d'embrayage, d'assurer le complément de liquide de frein nécessaire pour compenser les pertes de liquide de frein ou fluide hydraulique, dans le circuit de freinage, et cela sans nécessiter un apport extérieur de liquide de frein.
Le dispositif selon l'invention présente en outre l'avantage de présenter un faible encombrement, de sorte qu'il peut être aisément implanté sur un véhicule automobile.

### Description des figures

Toutes les figures sont relatives à l'invention.
La figure 1a est une coupe d'une partie du dispositif 1 selon un plan vertical comprenant une direction axiale 11.
La figure 1b est une vue en perspective de dessus de ladite partie de la figure 1a avant assemblage du moyen de filtration 5.
Les figures 2a et 2b sont des vues en perspective relatives à un moyen de filtration 5 comprenant une pièce annulaire dite longue 50b.

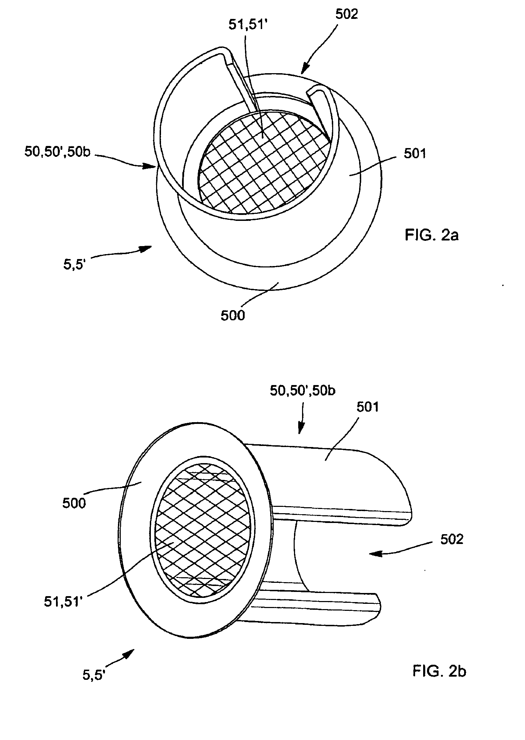

La figure 2a est une vue latérale de dessous.
La figure 2b est une vue latérale de dessus.

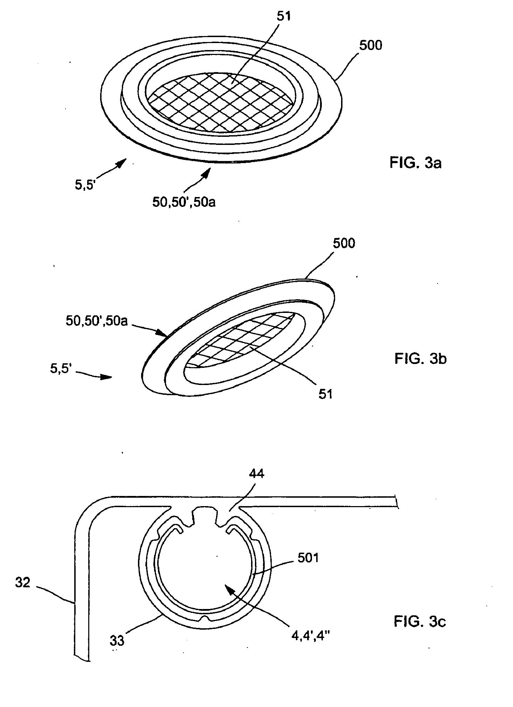

Les figures 3a et 3b sont des vues en perspective relatives à un moyen de filtration 5 comprenant une pièce annulaire dite courte 50a.
La figure 3a est une vue latérale de dessus.
La figure 3b est une vue latérale de dessous.

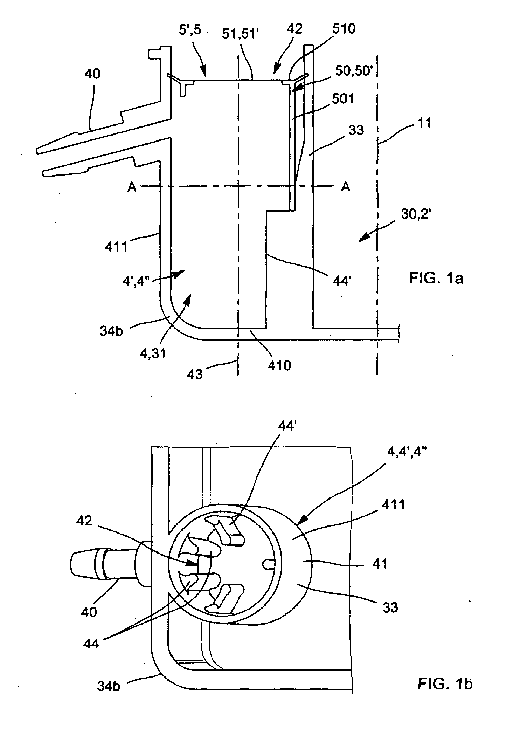

La figure 3c est une coupe de ladite partie de la figure 1a, selon le plan horizontal A-A de la figure 1a, ledit plan horizontal étant perpendiculaire à ladite direction axiale 11.

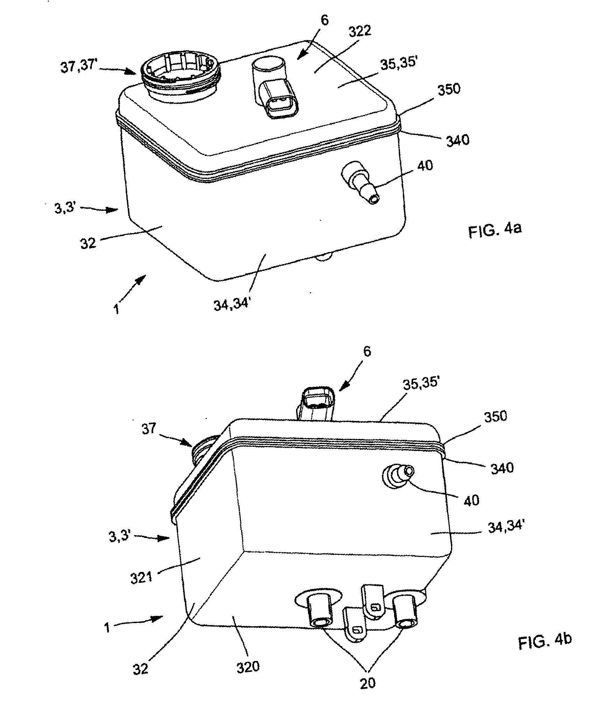

Les figures 4a et 4b sont des vues en perspective du dispositif 1 comprenant un réservoir 3 doté d'une coque inférieure 34 et d'une coque supérieure 35 formant un couvercle pour la coque inférieure 34.
La figure 4a est une vue latérale de dessus.
La figure 4b est une vue latérale de dessous.

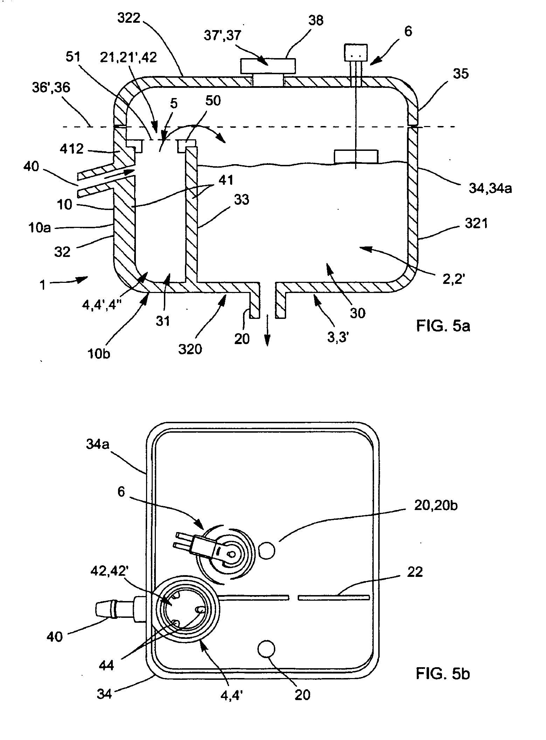

La figure 5a est une représentation schématique et fonctionnelle du dispositif 1 en coupe selon un plan vertical comprenant ladite direction axiale 11.
La figure 5b est une vue de dessus de la coque inférieure 34 dans laquelle le moyen de détection 6 a été représenté.

### Description détaillée de l'invention

Comme on peut l'observer sur la figure 5a, ledit réservoir 3 peut comprendre une paroi extérieure 32, ladite paroi extérieure 32 étant traversée par lesdits conduits de sortie 20 et d'entrée 40, et comprenant une partie basse 320 formant un fond, une partie latérale 321 formant une paroi latérale et une partie supérieure 322 formant une voûte, et une paroi intérieure 33 formant, avec ledit moyen de filtration 5, une partition dudit réservoir 3 isolant lesdites enceintes amont 4 et aval 2'. D'autres cloisons verticales ou sensiblement verticales, non illustrées, s'étendent à partir de sa base, sur une partie de la hauteur du réservoir.
Comme on peut le voir sur les figures 5a et 5b, ladite enceinte amont 4 peut former un corps de récipient 4' doté d'une paroi dite amont 41 comprenant une ouverture 42, typiquement une ouverture supérieure 42' coopérant avec ledit moyen de filtration 5, une partie de ladite paroi amont 41 formant ladite paroi intérieure 33, l'autre partie de ladite paroi amont 41 formant avec ladite paroi extérieure 32 une paroi dite commune 10, ladite paroi commune 10 étant traversée par ledit conduit d'entrée 40, typiquement perpendiculairement à ladite paroi commune 10. Ladite paroi commune 10 peut comprendre une première paroi commune 10a formant une partie de ladite partie latérale 321 dudit réservoir 3.
En outre, ladite paroi commune 10 peut comprendre une seconde paroi commune 10b formant une partie de ladite partie basse 320 dudit réservoir 3.
Selon une autre modalité qui n'a pas été illustrée par une figure, ladite paroi commune 10 peut éventuellement comprendre une troisième paroi commune formant une partie de ladite partie supérieure 322 dudit réservoir 3.

Comme illustré sur les figures 4a et 4b, ledit réservoir 3 peut être un réservoir en matière plastique 3' comprenant une coque dite inférieure 34 et une coque dite supérieure 35, lesdites coques inférieure 34 et supérieure 35 étant des pièces moulées 34', 35' assemblées par leur rebords d'assemblage, ladite coque inférieure 34 présentant un rebord d'assemblage dit supérieur 340 coopérant avec un rebord d'assemblage dit inférieur 350 de ladite coque supérieure 35 dans un plan d'assemblage 36, de manière à former ledit réservoir 3.

Comme illustré sur les figures 1a et 1b, ledit corps de récipient 4' formant ladite enceinte amont 4 peut être un corps de récipient axial 4" doté d'une direction axiale 43, ledit corps 4" comprenant un fond 410, une jupe latérale 411 présentant une section transversale typiquement circulaire dans un plan perpendiculaire à ladite direction axiale 43, et ladite ouverture 42 présentant typiquement ladite section transversale.

Selon l'invention et comme illustré sur les figures 2a à 3b, ledit moyen de filtration 5 peut former une pièce de filtration composite 5' comprenant une partie périphérique 50 assemblée de manière étanche audit corps de récipient 4', 4", et une partie centrale filtrante 51.
Ladite partie centrale filtrante 51 peut former une toile filtrante 51' et ladite partie périphérique 50 peut former une pièce annulaire en matière plastique 50' surmoulant la totalité d'un bord périphérique 510 de ladite toile filtrante 51 de manière à solidariser ladite toile filtrante 51' à ladite pièce annulaire 50', et de manière à ce que la totalité dudit fluide amont s'écoulant de ladite enceinte amont 4 vers ladite enceinte aval 2' traverse ladite toile filtrante 51' afin de débarrasser ledit fluide amont des dites particules solides.
Selon une modalité illustrée sur les figures 3a et 3b, ladite pièce annulaire 50' peut être une pièce annulaire dite courte 50a, ladite pièce annulaire courte 50a comprenant essentiellement une lèvre annulaire d'étanchéité 500.
Dans un mode de réalisation avantageux, ladite toile filtrante 51' a une taille de maille comprise entre 50 et 250 µm, et de préférence comprise entre 100 et 150 µm. A titre d'exemple, une taille de maille de 120 µm convient très bien. Ladite partie centrale filtrante 51 peut être formée en polyamide (PA) ou polypropylène (PP).

Selon une autre modalité illustrée sur les figures 2a et 2b, ladite pièce annulaire 50' peut être une pièce annulaire dite longue 50b, ladite pièce annulaire longue 50b comprenant ladite lèvre d'étanchéité 500 et une projection axiale 501 apte à coulisser à l'intérieur dudit corps de récipient 4', 4", ladite projection axiale 501 comprenant avantageusement une partie évidée 502 en regard dudit conduit d'entrée 40.
Dans un mode de réalisation particulier, ladite lèvre d'étanchéité 500 peut coopérer de manière étanche avec un rebord 412 dudit corps de récipient 4', 4", avantageusement grâce à une soudure annulaire.

Comme on peut le voir sur les figures 1b, 3c et 5b, ledit corps de récipient 4', 4" peut comprendre au moins une projection radiale intérieure 44 assurant un positionnement axial prédéterminé dudit moyen de filtration 5 par rapport audit corps de récipient 4', 4".

Comme illustré sur les figures 4a à 5a, ledit dispositif 1 peut comprendre un moyen de détection 6 du niveau dudit fluide hydraulique aval dans ladite enceinte aval 2'.
On voit sur ces mêmes figures que ledit réservoir 3 peut comprendre une ouverture supérieure 37 fermée par un bouchon amovible 38, de manière à permettre un remplissage, par exemple un remplissage initial, de ladite enceinte aval 2' en fluide hydraulique de freinage.

Comme illustré la figure 5a, ledit plan d'assemblage 36 peut être un plan horizontal 36', ledit plan d'assemblage horizontal 36' étant destiné à être localisé de préférence au-dessus du niveau dudit fluide hydraulique aval dans ladite enceinte aval 2'.

Selon l'invention, ledit moyen de filtration 5 peut présenter une surface filtrante allant de 0,15 cm² à 100 cm², de préférence de 2 cm² à 20 cm², et de manière encore plus préférée de 3 cm² à 10 cm². Cette surface filtrante importante présente un avantage par rapport à une implantation du moyen de filtration dans un conduit hydraulique, car les conduits hydrauliques ont en général un diamètre assez faible, de l'ordre de 4 ou 5 mm. Dû à l'importante surface filtrante, le moyen de filtration ne risque pas d'être obstrué par les particules et débris qu'il retient. De plus, compte tenu de l'implantation du moyen de filtration 5 dans le réservoir d'alimentation 3 et compte tenu de sa disposition géométrique, la plupart des particules et débris retenus tombent au fond de la partie amont 31 dudit réservoir 3, où elles ne risquent pas d'être entraînées dans les conduits de sortie 20. Toutefois, la mise en oeuvre verticale et / ou oblique du moyen de filtration ne sort pas du cadre de la présente invention. Selon les constatations de la demanderesse, le dispositif selon l'invention permet une utilisation de la même toile filtrante pendant toute la durée de vie du dispositif, sachant que compte tenu du procédé d'assemblage des deux coques qui forment ledit dispositif, à savoir par soudure, il est en pratique impossible de remplacer ledit tissu filtrant.

Typiquement, ladite enceinte aval 2' et ladite enceinte amont 4 peuvent présenter des capacités de stockage notées respectivement C_{V} et C_{M} telles que le rapport C_{V}/C_{M} aille de 3 à 30.

### Exemples:

Les figures correspondent à des exemples de réalisation de dispositifs 1 ou de parties de dispositifs 1 selon l'invention.
On a fabriqué deux modalités du dispositif 1 représenté notamment sur les figures 4a et 4b :
a) selon une première modalité, le moyen de filtration 5 comprenait une pièce annulaire à jupe courte 50a comme représenta sur les figures 3a et 3b,
b) selon une seconde modalité, le moyen de filtration 5 comprenait une pièce annulaire à jupe longue 50b comme représenté sur les figures 2a et 2b.

Pour cela :
- on a fabriqué ou approvisionné, des coques supérieures 35, 35' par moulage de matière plastique, par exemple d'un polypropylène ;
- on a fabriqué une première modalité 34a de coque inférieure 34, 34' adaptée à ladite pièce annulaire 50a à jupe courte, comme illustré sur les figures 5a et 5b ;
- on a fabriqué une seconde modalité 34b de coque inférieure 34, 34' adaptée à ladite pièce annulaire 50b à jupe longue , comme illustré sur les figures 1a et 1b, les coques inférieures 34, 34', 34a, 34b étant formées par moulage de matière thermoplastique, par exemple d'un polypropylène. Dans ce cas, comme on peut le voir sur les figures 1a, 1b et 3c, ladite enceinte amont 4, 4', 4" comprend une pluralité de projections radiales 44 et 44' destinées à coopérer avec la projection axiale 501 de la pièce annulaire longue 50b ;

- on a formé ou approvisionné le moyen de détection 6 et on l'a assemblé à ladite coque supérieure 35, 35' ;
- on a formé ou approvisionné deux modalités dudit moyen de filtration 5, 5', une première modalité 50a selon les figures 3a et 3b et une seconde modalité 50b selon les figures 2a et 2b. On a par exemple fabriqué des moyens de filtration 50a, 50b, en surmoulant le bord 510 d'une portion circulaire de toile filtrante 51' dans ladite pièce annulaire en matière plastique 50' formant ladite partie périphérique 50 ;
- on a assemblé de manière étanche le moyen de filtration 50a, 50b à la coque inférieure correspondante 34a, 34b, par exemple en soudant la lèvre annulaire d'étanchéité 500 sur l'ouverture 42 de ladite enceinte amont 4 et par exemple sur le rebord 412 de la jupe latérale 411 formant ladite paroi amont 41 ;
- enfin, on a soudés l'un a l'autre les bords 340, 350 des coques 34, 35, de manière à former lesdits réservoirs en matière plastique 3, 3'.

On a aussi fabriqué des coques supérieures 35, 35' et des coques inférieures 34, 34', 34a, 34b en polyamide. Avantageusement, on a utilisé des toiles filtrantes 51 constituées en PP dans le cas de coques en PP et des toile en PA dans le cas de coques en PA, de manière à faciliter la soudure de la toile filtrante 51 à la coque inférieure 34, 34', 34a, 34b.

### Liste des repères

- Dispositif d'alimentation: 1
Paroi commune à 32 et à 4/4' 10
Première paroi commune 10a
Seconde paroi commune 10b
Direction axiale 11
- Enceinte pour fluide hydraulique de freinage: 2
- Enceinte aval: 2'
Conduit de sortie 20
Orifice d'entrée 21
Orifice intermédiaire 21'
Cloison partielle 22
- Réservoir: 3
- Réservoir en matière plastique: 3'
Partie aval de 3 formant 2 30
Partie amont formant 4 31
Paroi extérieure 32
Partie basse ou fond 320
Partie latérale, paroi latérale 321
Partie supérieure, voûte 322
Paroi intérieure 33
Coque inférieure 34,34',34a,34b
Rebord supérieur 340
Coque supérieure 35, 35'
Rebord inférieur 350
Plan d'assemblage 36
Plan d'assemblage horizontal 36'
Ouverture 37
Ouverture supérieure 37'
Bouchon amovible 38
- Enceinte amont: 4
- Corps de récipient: 4'
- Corps de récipient axial: 4"
Conduit d'entrée 40
Paroi amont 41
Fond 410
Jupe latérale 411
Rebord de 411 412
Ouverture de 4, 4' 42
Direction axiale de 4" 43
Projection radiale intérieure 44, 44'
- Moyen de filtration: 5
- Pièce composite: 5'
Partie périphérique 50
Pièce annulaire en matière plastique 50'
Pièce annulaire à jupe courte 50a
Pièce annulaire à jupe longue 50b
Lèvre d'étanchéité annulaire 500
Projection axiale 501
Partie évidée en regard de 40 502
Partie centrale filtrante 51
Toile filtrante 51'
Bord surmoulé de 51, 51' 510
- Moyen de détection de niveau: 6

## Revendications

1. Dispositif d'alimentation (1) d'un circuit hydraulique de freinage d'un véhicule automobile doté d'un embrayage à commande hydraulique, en un fluide hydraulique, dit aval, de freinage, comprenant une enceinte (2) destinée à contenir ledit fluide hydraulique, ladite enceinte (2) étant pourvue d'au moins un conduit de sortie (20) alimentant ledit circuit hydraulique, et d'un orifice d'entrée (21) permettant une introduction dudit fluide hydraulique aval dans ladite enceinte (2), de manière à compenser toute perte ou consommation dudit liquide hydraulique aval dans ledit circuit hydraulique de freinage, où :
a) ladite enceinte (2) est une enceinte dite aval (2') formant une partie dite aval (30) d'un réservoir (3), ledit réservoir (3) comprenant une partie dite amont (31) formant une enceinte dite amont (4) destinée à être alimentée en un fluide hydraulique, dit amont, de l'embrayage dudit véhicule,
b) ladite enceinte amont (4) comprend au moins un conduit dit d'entrée (40), ledit conduit d'entrée (40) assurant un transfert dudit fluide hydraulique amont dudit embrayage vers ladite enceinte amont (4),
c) ledit orifice d'entrée (21) est un orifice intermédiaire (21') faisant déboucher ladite enceinte amont (4) dans ladite enceinte aval (2'), ledit orifice intermédiaire (21') étant doté d'un moyen de filtration (5) dudit fluide hydraulique amont de manière à transformer en continu ledit fluide hydraulique amont, typiquement chargé de particules solides en ledit fluide hydraulique aval dépourvu de particules solides et ainsi propre à alimenter ledit circuit de freinage,
**caractérisé en ce que**
d) ledit moyen de filtration (5) forme une pièce de filtration composite (5') comprenant une partie périphérique (50) assemblée de manière étanche audit corps de récipient (4', 4"), et une partie centrale filtrante (51).

2. Dispositif selon la revendication 1 dans lequel ledit réservoir (3) comprend une paroi extérieure (32), ladite paroi extérieure (32) étant traversée par lesdits conduits de sortie (20) et d'entrée (40), et comprenant une partie basse (320) formant un fond, une partie latérale (321) formant une paroi latérale et une partie supérieure (322) formant une voûte, et une paroi intérieure (33) formant, avec ledit moyen de filtration (5), une partition dudit réservoir (3) isolant lesdites enceintes amont (4) et aval (2').

3. Dispositif selon une quelconque des revendications 1 à 2 dans lequel ladite enceinte amont (4) forme un corps de récipient (4') doté d'une paroi dite amont (41) comprenant une ouverture (42) coopérant avec ledit moyen de filtration (5), une partie de ladite paroi amont (41) formant ladite paroi intérieure (33), l'autre partie de ladite paroi amont (41) formant avec ladite paroi extérieure (32) une paroi dite commune (10), ladite paroi commune (10) étant traversée par ledit conduit d'entrée (40).

4. Dispositif selon la revendication 3 dans lequel ladite paroi commune (10) comprend une dite première paroi commune (10a) formant une partie de ladite partie latérale (321) dudit réservoir (3).

5. Dispositif selon une quelconque des revendications 3 à 4 dans lequel ladite paroi commune (10) comprend une dite seconde paroi commune (10b) formant une partie de ladite partie basse (320) dudit réservoir (3).

6. Dispositif selon une quelconque des revendications 1 à 5 dans lequel ledit réservoir (3) est un réservoir en matière plastique (3') comprenant une coque dite inférieure (34) et une coque dite supérieure (35), lesdites coques inférieure (34) et supérieure (35) étant des pièces moulées (34', 35') assemblées par leur rebords d'assemblage, ladite coque inférieure (34) présentant un rebord d'assemblage dit supérieur (340) coopérant avec un rebord d'assemblage dit inférieur (350) de ladite coque supérieure (35) dans un plan d'assemblage (36), de manière à former ledit réservoir (3).

7. Dispositif selon une quelconque des revendications 3 à 6 dans lequel ledit corps de récipient (4') formant ladite enceinte amont (4) est un corps de récipient axial (4") doté d'une direction axiale (43), ledit corps (4") comprenant un fond (410), une jupe latérale (411) présentant une section transversale typiquement circulaire dans un plan perpendiculaire à ladite direction axiale (43), et ladite ouverture (42) présentant typiquement ladite section transversale.

8. Dispositif selon la revendication 1 dans lequel ladite partie centrale filtrante (51) forme une toile filtrante (51') et dans lequel ladite partie périphérique (50) forme une pièce annulaire en matière plastique (50') surmoulant la totalité d'un bord périphérique (510) de ladite toile filtrante (51) de manière à solidariser ladite toile filtrante (51') à ladite pièce annulaire (50'), et de manière à ce que la totalité dudit fluide amont s'écoulant de ladite enceinte amont (4) vers ladite enceinte aval (2') traverse ladite toile filtrante (51') afin de débarrasser ledit fluide amont des dites particules solides.

9. Dispositif selon la revendication 8 dans lequel ladite pièce annulaire (50') est une pièce annulaire dite courte (50a), ladite pièce annulaire courte (50a) comprenant essentiellement une lèvre annulaire d'étanchéité (500).

10. Dispositif selon la revendication 8 dans lequel ladite pièce annulaire (50') est une pièce annulaire dite longue (50b), ladite pièce annulaire longue (50b) comprenant une lèvre d'étanchéité (500) et une projection axiale (501) apte à coulisser à l'intérieur dudit corps de récipient (4', 4"), ladite projection axiale (501) comprenant avantageusement une partie évidée (502) en regard dudit conduit d'entrée (40).

11. Dispositif selon une quelconque des revendications 9 à 10 dans lequel ladite lèvre d'étanchéité (500) coopère de manière étanche avec un rebord (412) dudit corps de récipient (4', 4"), avantageusement grâce à une soudure annulaire.

12. Dispositif selon une quelconque des revendications 3 à 11 dans lequel ledit corps de récipient (4', 4") comprend au moins une projection radiale intérieure (44) assurant un positionnement axial prédéterminé dudit moyen de filtration (5) par rapport audit corps de récipient (4', 4").

13. Dispositif selon une quelconque des revendications 1 à 12 comprenant un moyen de détection (6) du niveau dudit fluide hydraulique aval dans ladite enceinte aval (2').

14. Dispositif selon une quelconque des revendications 1 à 13 dans lequel ledit réservoir (3) comprend une ouverture supérieure (37) fermée par un bouchon amovible, de manière à permettre un remplissage de ladite enceinte aval (2') en fluide hydraulique de freinage.

15. Dispositif selon une quelconque des revendications 7 à 14 dans lequel ledit plan d'assemblage (36) est un plan horizontal (36'), ledit plan d'assemblage horizontal (36') étant destiné à être localisé de préférence au-dessus du niveau dudit fluide hydraulique aval dans ladite enceinte aval (2').

16. Dispositif selon une quelconque des revendications 1 à 15 dans lequel ledit moyen de filtration présente une surface filtrante allant de 0,15 cm² à 100 cm² , de préférence de 2 cm² à 20 cm², et de manière encore plus préférée de 3 cm² à 10 cm².

17. Dispositif selon une quelconque des revendications 1 à 16 dans lequel ladite enceinte aval (2') et ladite enceinte amont (4) présentent des capacités de stockage notées respectivement C_{V} et C_{M} telles que le rapport C_{V}/C_{M} aille de 3 à 30.

## Claims

1. Device (1) for supplying a hydraulic brake fluid, termed a downstream hydraulic fluid, to a hydraulic brake circuit of a motor vehicle equipped with a hydraulically controlled clutch, comprising an enclosure (2) intended to contain said hydraulic fluid, said enclosure (2) being provided with at least one outlet nozzle (20) supplying said hydraulic circuit, and with an inlet orifice (21) allowing said downstream hydraulic fluid to be introduced into said enclosure (2) so as to compensate for any loss or consumption of said downstream hydraulic fluid in said hydraulic brake circuit, where :
a) said enclosure (2) is an enclosure, termed a downstream enclosure (2'), forming a portion, termed a downstream portion (30), of a reservoir (3), said reservoir (3) comprising a portion, termed an upstream portion (31), forming an enclosure, termed an upstream enclosure (4), intended to be supplied with a hydraulic fluid, termed an upstream hydraulic fluid, from the clutch of said vehicle,
b) said upstream enclosure (4) comprises at least one nozzle, termed an inlet nozzle (40), said inlet nozzle (40) serving to transfer said upstream hydraulic fluid from said clutch toward said upstream enclosure (4),
c) said inlet orifice (21) is an intermediate orifice (21') whereby said upstream enclosure (4) opens into said downstream enclosure (2'), said intermediate orifice (21') being equipped with a means (5) for filtering said upstream hydraulic fluid so as to continuously convert said upstream hydraulic fluid, typically loaded with solid particles, into said downstream hydraulic fluid devoid of solid particles and thus fit for supplying said brake circuit, **characterized in that**:
d) said filtration means (5) forms a composite filtration element (5') comprising a peripheral portion (50) assembled in a sealed manner to said container body (4', 4"), and a filtering central portion (51).

2. Device according to claim 1 in which said reservoir (3) comprises an outer wall (32), said outer wall (32) being traversed by said outlet (20) and inlet (40) nozzles and comprising a bottom portion (320) forming a base, a lateral portion (321) forming a side wall and an upper portion (322) forming a crown, and an inner wall (33) forming, together with said filtration means (5), a partition of said reservoir (3) which isolates said upstream (4) and downstream (2') enclosures.

3. Device as claimed in either one of claims 1 and 2 in which said upstream enclosure (4) forms a container body (4') equipped with a wall, termed an upstream wall (41), comprising an opening (42) cooperating with said filtration means (5), one portion of said upstream wall (41) forming said inner wall (33), the other portion of said upstream wall (41) forming a wall, termed a common wall (10), with said outer wall (32), said common wall (10) being traversed by said inlet nozzle (40).

4. Device according to claim 3 in which said common wall (10) comprises a wall, termed a first common wall (10a), forming part of said lateral portion (321) of said reservoir (3).

5. Device according to either of claims 3 and 4 in which said common wall (10) comprises a wall, termed a second common wall (10b), forming part of said bottom portion (320) of said reservoir (3).

6. Device according to any one of claims 1 to 5 in which said reservoir (3) is a reservoir (3') made of plastic comprising a shell, termed a lower shell (34), and a shell, termed an upper shell (35), said lower (34) and upper (35) shells being molded parts (34', 35') assembled by their assembly flanges, said lower shell (34) having a flange, termed an upper assembly flange (340), cooperating with a flange, termed a lower assembly flange (350), of said upper shell (35) in an assembly plane (36) so as to form said reservoir (3).

7. Device according to any one of claims 3 to 6 in which said container body (4') forming said upstream enclosure (4) is an axial container body (4") having an axial direction (43), said body (4") comprising a base (410), a lateral skirt (411) having a typically circular cross section in a plane perpendicular to said axial direction (43), and said opening (42) typically having said cross section.

8. Device according to claim 1 in which said filtering central portion (51) forms a filter cloth (51') and in which said peripheral portion (50) forms an annular part (50') made of plastic overmolding the whole of a peripheral edge (510) of said filter cloth (51') so as to secure said filter cloth (51') to said annular part (50'), and such that all of said upstream fluid flowing from said upstream enclosure (4) toward said downstream enclosure (2') passes through said filter cloth (51') in order to rid said upstream fluid of said solid particles.

9. Device according to claim 8 in which said annular part (50') is a part termed a short annular part (50a), said short annular part (50a) essentially comprising an annular sealing lip (500).

10. Device according to claim 8 in which said annular part (50') is a part termed a long annular part (50b), said long annular part (50b) comprising a sealing lip (500) and an axial projection (501) designed to slide inside said container body (4', 4"), said axial projection (501) advantageously comprising a cut-out portion (502) facing said inlet nozzle (40).

11. Device according to either one of claims 9 and 10 in which said sealing lip (500) cooperates in a sealed manner with a flange (412) of said container body (4', 4"), advantageously by means of an annular weld.

12. Device according to any one of claims 3 to 11 in which said container body (4', 4") comprises at least one inner radial projection (44) providing a predetermined axial positioning for said filtration means (5) with respect to said container body (4', 4").

13. Device according to any one of claims 1 to 12 comprising a means (6) for detecting the level of said downstream hydraulic fluid in said downstream enclosure (2').

14. Device according to any one of claims 1 to 13 in which said reservoir (3) comprises an upper opening (37) closed by a removable cap so as to allow a filling of said downstream enclosure (2') with hydraulic brake fluid.

15. Device according to any one of claims 7 to 14 in which said assembly plane (36) is a horizontal plane (36'), said horizontal assembly plane (36') being intended to be located preferably above the level of said downstream hydraulic fluid in said downstream enclosure (2').

16. Device according to any one of claims 1 to 15 in which said filtration means has a filtering area ranging from 0.15 cm² to 100 cm², preferably from 2 cm² to 20 cm², and preferably still from 3 cm² to 10 cm².

17. Device according to any one of claims 1 to 16 in which said downstream enclosure (2') and said upstream enclosure (4) have storage capacities respectively designated C_{V} and C_{M} such that the ratio C_{V}/C_{M} ranges from 3 to 30.

## Patentansprüche

1. Vorrichtung (1) zur Speisung eines hydraulischen Bremskreises eines Kraftfahrzeugs, das mit einer Kupplung mit hydraulischer Steuerung ausgestattet ist, mit sogenannter stromabwärtiger hydraulischer Bremsflüssigkeit, mit einer Kammer (2), die dazu vorgesehen ist, die Hydraulikflüssigkeit zu enthalten, wobei die Kammer (2) mit mindestens einer den Hydraulikkreis speisenden Auslassleitung (20) und einer Einlassöffnung (21) versehen ist, die den Eintritt der stromabwärtigen Hydraulikflüssigkeit in die Kammer (2) gestattet, so dass jeglicher Verlust oder Verbrauch der stromabwärtigen Hydraulikflüssigkeit im hydraulischen Bremskreis kompensiert wird, bei der:
a) die Kammer (2) eine sogenannte stromabwärtige Kammer (2') ist, die einen sogenannten stromabwärtigen Abschnitt (30) eines Behälters (3) bildet, wobei der Behälter (3) einen sogenannten stromaufwärtigen Abschnitt (31) aufweist, der eine sogenannte stromaufwärtige Kammer (4) bildet, die dazu vorgesehen ist, mit sogenannter stromaufwärtiger Hydraulikflüssigkeit der Fahrzeugkupplung gespeist zu werden,
b) die stromaufwärtige Kammer (4) mindestens eine sogenannte Einlassleitung (40) aufweist, wobei die Einlassleitung (40) ein Weiterleiten der stromaufwärtigen Hydraulikflüssigkeit der Kupplung zur stromaufwärtigen Kammer (4) gewährleistet,
c) die Einlassöffnung (21) eine Zwischenöffnung (21') ist, mit der die stromaufwärtige Kammer (4) in die stromabwärtige Kammer (2') mündet, wobei die Zwischenöffnung (21') mit einem Mittel (5) zum Filtern der stromaufwärtigen Hydraulikflüssigkeit versehen ist, so dass die stromaufwärtige Hydraulikflüssigkeit, die üblicherweise feste Partikel enthält, kontinuierlich in die stromabwärtige Hydraulikflüssigkeit umgewandelt wird, die keine festen Partikel enthält und somit den Bremskreis speisen kann,
**dadurch gekennzeichnet, dass**
(d) das Filtermittel (5) ein Verbundfilterteil (5') mit einem Umfangsabschnitt (50), der in dichter Weise am Behälterkörper (4', 4") angebracht ist, und mit einem filternden Mittelabschnitt (51) bildet.

2. Vorrichtung nach Anspruch 1, bei der der Behälter (3) eine Außenwand (32) aufweist, wobei die Außenwand (32) von der Auslassleitung (20) und der Einlassleitung (40) durchquert wird und einen unteren Abschnitt (320), der einen Boden bildet, einen Seitenabschnitt (321), der eine Seitenwand bildet, und einen oberen Abschnitt (322), der eine Abdeckung bildet, aufweist, sowie eine Innenwand (33), die mit dem Filtermittel (5) eine Abtrennung des Behälters (3) bildet, die die stromaufwärtige Kammer (4) und die stromabwärtige Kammer (2') isoliert.

3. Vorrichtung nach einem der Ansprüche 1 bis 2, bei der die stromaufwärtige Kammer (4) einen Behälterkörper (4') bildet, der mit einer sogenannten stromaufwärtigen Wand (41) mit einer Öffnung (42) versehen ist, die mit dem Filtermittel (5) zusammenwirkt, wobei ein Teil der stromaufwärtigen Wand (41) die Innenwand (33) bildet und der andere Teil der stromaufwärtigen Wand (41) mit der Außenwand (32) eine sogenannte gemeinsame Wand (10) bildet, wobei die Einlassleitung (40) die gemeinsame Wand (10) durchquert.

4. Vorrichtung nach Anspruch 3, bei der die gemeinsame Wand (10) eine sogenannte erste gemeinsame Wand (10a) aufweist, die einen Teil des Seitenabschnitts (321) des Behälters (3) bildet.

5. Vorrichtung nach einem der Ansprüche 3 bis 4, bei der die gemeinsame Wand (10) eine sogenannte zweite gemeinsame Wand (10b) aufweist, die einen Teil des unteren Abschnitts (320) des Behälters (3) bildet.

6. Vorrichtung nach einem der Ansprüche 1 bis 5, bei der der Behälter (3) ein Kunststoffbehälter (3') mit einer sogenannten unteren Schale (34) und einer sogenannten oberen Schale (35) ist, wobei die untere Schale (34) und die obere Schale (35) geformte Teile (34', 35') sind, die über ihre Verbindungsränder zusammengefügt sind, wobei die untere Schale (34) einen sogenannten oberen Verbindungsrand (340) aufweist, der in einer Montageebene (36) mit einem sogenannten unteren Verbindungsrand (350) der oberen Schale (35) zusammenwirkt, so dass der Behälter (3) gebildet wird.

7. Vorrichtung nach einem der Ansprüche 3 bis 6, bei der der Behälterkörper (4'), der die stromaufwärtige Kammer (4) bildet, ein axialer Behälterkörper (4") mit axialer Richtung (43) ist, wobei der Körper (4") einen Boden (410), eine seitliche Schürze (411) mit einem Querschnitt, der in einer zur axialen Richtung (43) senkrechten Ebene üblicherweise kreisförmig ist, und die Öffnung (42) aufweist, die üblicherweise den Querschnitt hat.

8. Vorrichtung nach Anspruch 1, bei der der filternde Mittelabschnitt (51) ein Filtriertuch (51') bildet und der Umfangsabschnitt (50) ein ringförmiges Teil (50') aus Kunststoff bildet, das auf die Gesamtheit eines Umfangsrands (510) des Filtriertuchs (51) aufgeformt ist, so dass das Filtriertuch (51') fest mit dem ringförmigen Teil (50') verbunden ist und die gesamte stromaufwärtige Flüssigkeit, die von der stromaufwärtigen Kammer (4) zur stromabwärtigen Kammer (2') fließt, durch das Filtriertuch (51') fließt, um die festen Partikel aus der stromaufwärtigen Flüssigkeit zu beseitigen.

9. Vorrichtung nach Anspruch 8, bei der das ringförmige Teil (50') ein sogenanntes kurzes ringförmiges Teil (50a) ist, wobei das kurze ringförmige Teil (50a) im Wesentlichen eine ringförmige Dichtlippe (500) aufweist.

10. Vorrichtung nach Anspruch 8, bei der das ringförmige Teil (50') ein sogenanntes langes ringförmiges Teil (50b) ist, wobei das lange ringförmige Teil (50b) eine Dichtlippe (500) und einen axialen Vorsprung (501) aufweist, der im Behälterkörper (4', 4") gleiten kann, wobei der axiale Vorsprung (501) vorteilhaft gegenüber der Einlassleitung (40) einen ausgesparten Abschnitt (502) aufweist.

11. Vorrichtung nach einem der Ansprüche 9 bis 10, bei der die Dichtlippe (500) vorteilhaft aufgrund einer ringförmigen Schweißverbindung in dichter Weise mit einem Rand (412) des Behälterkörpers (4', 4") zusammenwirkt.

12. Vorrichtung nach einem der Ansprüche 3 bis 11, bei der der Behälterkörper (4', 4") mindestens einen radialen Innenvorsprung (44) aufweist, der eine vorbestimmte axiale Positionierung des Filtermittels (5) in Bezug auf den Behälterkörper (4', 4") gewährleistet.

13. Vorrichtung nach einem der Ansprüche 1 bis 12, mit einem Mittel (6) zur Erfassung des Füllstands der stromabwärtigen Flüssigkeit in der stromabwärtigen Kammer (2').

14. Vorrichtung nach einem der Ansprüche 1 bis 13, bei der der Behälter (3) eine obere Öffnung (37) aufweist, die durch einen abnehmbaren Deckel verschlossen ist, so dass die stromabwärtige Kammer (2') mit hydraulischer Bremsflüssigkeit gefüllt werden kann.

15. Vorrichtung nach einem der Ansprüche 7 bis 14, bei der die Montageebene (36) eine horizontale Ebene (36') ist, wobei die horizontale Montageebene (36') dazu vorgesehen ist, vorzugsweise über dem Füllstand der stromabwärtigen Hydraulikflüssigkeit in der stromabwärtigen Kammer (2') zu liegen.

16. Vorrichtung nach einem der Ansprüche 1 bis 15, bei der das Filtermittel eine filternde Oberfläche aufweist, die zwischen 0,15 cm² und 100 cm², vorzugsweise zwischen 2 cm² und 20 cm² und in einer weiter bevorzugten Weise zwischen 3 cm² und 10 cm² beträgt.

17. Vorrichtung nach einem der Ansprüche 1 bis 16, bei der die stromabwärtige Kammer (2') und die stromaufwärtige Kammer (4) eine solche Speicherkapazität haben, die mit C_{V} bzw. C_{M} bezeichnet ist, dass das Verhältnis C_{V}/C_{M} zwischen 3 und 30 beträgt.
